# EUROPÄISCHE PATENTSCHRIFT

(11) **EP 0 897 402 B1**
(45) Veröffentlichungstag und Bekanntmachung des Hinweises auf die Patenterteilung: **28.03.2001**
(21) Anmeldenummer: 97921745.2
(22) Anmeldetag: 24.04.1997
(51) Int. Cl.: C08G 18/10, C08G 18/48, C08G 18/76

(54) **VERFAHREN ZUR HERSTELLUNG VON ELASTISCHEN POLYURETHAN-FORMKÖRPERN MIT KOMPAKTER OBERFLÄCHE UND ZELLIGEM KERN**
PROCESS FOR PRODUCING ELASTIC POLYURETHANE MOULDINGS WITH COMPACT SURFACES AND CELLULAR CORES
PROCEDE DE FABRICATION DE CORPS MOULES EN POLYURETHANE ELASTIQUES A SURFACE COMPACTE ET A NOYAU CELLULAIRE

(30) Priorität: 08.05.1996 DE 19618392
(43) Veröffentlichungstag der Anmeldung: 24.02.1999
(73) Patentinhaber: BASF AKTIENGESELLSCHAFT, 67056 Ludwigshafen (DE)
(72) Erfinder: VOLKERT, Otto, D-67273 Weisenheim (DE); PITTRICH, Klaus, D-82211 Herrsching (DE)
(86) Internationale Anmeldenummer: EP9702101
(87) Internationale Veröffentlichungsnummer: WO9742244

(56) Entgegenhaltungen:
- EP-A- 0 355 000
- EP-A- 0 420 273
- EP-A- 0 480 583
- EP-A- 0 512 347
- WO-A-94/29361
- DE-A- 4 032 148
- US-A- 4 525 490

## Beschreibung

Elastische Polyurethan-Formkörper mit kompakter Oberfläche und zelligem Kern, sogenannte Polyurethan-Weichintegralschaumstoffe, sind seit langem bekannt und haben verschiedene Anwendungen. Typische Einsatzgebiete sind elastische Teile im Automobilbereich, wie Armlehnen, Lenkradumschäumungen und Spoiler, oder Schuhsohlen.

Vor allem bei Schuhsohlen werden sehr gute mechanische Eigenschaften, hohe Elastizität und ein geringer Abrieb verlangt.

Die Herstellung von Polyurethan-Schuhsohlen erfolgt üblicherweise nach folgendem Verfahren:

In einer Mischmaschine werden die Bestandteile des Polyurethansystems, die Polyolkomponente, üblicherweise als A-Komponente bezeichnet, und die Isocyanatkomponente, üblicherweise als B-Komponente bezeichnet, vermischt und die Mischung in ein metallisches Werkzeug gegossen. Dort erfolgt der Schäumvorgang unter Ausbildung einer integralen Dichtsverteilung.

Die A-Komponente, auch als Polyolkomponente bezeichnet, besteht zumeist aus
- einem oder mehreren hochmolekularen Polyolen, üblicherweise Polyether- und/oder Polyesterpolyolen,
- einem oder mehreren niedermolekularen H-funktionellen Kettenverlängerern,
- dem Treibmittel, Katalysatoren, Schaumstabilisatoren und sonstigen Schaumhilfsmitteln.

Als Isocyanatkomponente wird zumeist 4,4'-Diisocyanatodiphenylmethan, auch als "Rein-MDI" bezeichnet, verwendet. Da das Rein-MDI bei Raumtemperatur fest und deshalb schwierig zu verarbeiten ist, wird es üblicherweise durch Modifizierung "verflüssigt". So kann das Rein-MDI durch teilweise Ausbildung von Carbodiimid- bzw. Uretoniminstrukturen modifiziert werden. Diese Modifikation kann jedoch bei der Herstellung von Schuhsohlen nur in untergeordnetem Maße angewendet werden, da hierbei die Funktionalität der B-Komponente erhöht wird, was zu schlechteren mechanischen Eigenschaften der Schäume führt. Auch die Verwendung von höherfunktionellen MDI-Homologen, sogenanntem Roh-MDI, führt zu einer drastischen Erhöhung der Vernetzungsdichte und damit zu einem Abfall der mechanischen Werte, so daß diese Modifikation für die Herstellung von Schuhsohlen praktisch keine Rolle spielt.

Der übliche Weg zur Verflüssigung des MDI ist die Herstellung von Prepolymeren durch Umsetzung des Rein-MDI mit Polyolen. Typische Polyole hierzu sind Dipropylenglykol, Tripropylenglykol, aber auch höhermolekulare Polyole, wie sie in der A-Komponente verwendet werden.

Zur Herstellung der Prepolymeren wird das Rein-MDI mit soviel Polyol, insbesondere Diol, umgesetzt, daß das Prepolymere einen NCO-Gehalt von 18 bis 23 Gew.-% aufweist.

Aus dem Stand der Technik ist eine Reihe von Möglichkeiten zur Herstellung von Prepolymeren bekannt. So werden in der EP-A-013 487 uretoniminmodifizierte MDI-Prepolymere beschrieben. Die Prepolymere haben NCO-Gehalte von etwa 18 Gew.-%. In EP-A-235 888 werden mikrozellulare Elastomere auf der Basis von Polyesterpolyolen, die Alkanolamine enthalten, beschrieben. Als Isocyanatkomponente dienen Prepolymere aus MDI und den aminhaltigen Polyesteralkoholen mit einem NCO-Gehalt von etwa 18 Gew.-%. In EP-A-451 559 werden urethan- und carbodiimidmodifiziertes MDI mit Polyetherpolyolen zu zelligen Polyurethan-Integralschäumen umgesetzt. EP-A-582 385 beschreibt ein NCO-terminiertes Prepolymer aus MDI und Polyetherpolyolen mit einem NCO-Gehalt von 17 bis 21 Gew-%, das zu mikrozellularen Elastomeren umgesetzt werden kann. DE-A-1 618 380 beschreibt bei Raumtemperatur flüssige NCO-terminierte Prepolymere aus MDI und verzweigten aliphatischen Dihydroxyverbindungen mit Molekulargewichten bis 700. Der NCO-Gehalt dieser Prepolymeren beträgt 15 bis 25 Gew.-%. WO 91/17197 beschreibt die Herstellung von mikrozellularen Polyurethan-Elastomeren, die beispielsweise für Schuhsohlen verwendet werden. Als Isocyanatkomponente dienen hier Prepolymere aus MDI und Polytetramethylenglykol mit NCO-Gehalten von 14 bis 28 Gew.-%. Die Lagerstabilität derartiger Prepolymere auf Basis von Polytetramethylenglykol ist allerdings unbefriedigend. In WO 92/22595 werden Prepolymere aus MDI und einer Polyolmischung beschrieben, die aus einem verzweigten Diol oder Triol und mindestens einem 2- bis 4-funktionellen Polyoxyalkylenpolyol bestehen. Die NCO-Gehalte der Prepolymeren liegen im Bereich von 15 bis 19 Gew.-%.

Ein wesentlicher Nachteil der Verfahren des Standes der Technik besteht darin, daß bei der Verwendung von Wasser als Treibmittel keine Schuhsohlen mit Dichten kleiner als 400 g/l hergestellt werden können, da die Teile dann schrumpfen. Außerdem ist die Elastizität derartiger Schäume ungenügend. So liegt die Rückprallelastizität derartiger Platten nur bei 20 bis 25 %, was für den Einsatz in Schuhsohlensystemen ungenügend ist.

Der Erfindung lag die Aufgabe zugrunde, ein Verfahren zur Herstellung von Polyurethan-Weichintegralschäumen zu finden, das Wasser als Treibmittel verwendet und hochelastische und auch bei Formteildichte unter 400 g/l schrumpffreie Teile liefert.

Es wurde nun überraschenderweise gefunden, daß die Aufgabe der Erfindung gelöst werden kann, indem als Isocyanatkomponente bei der Herstellung von Weichintegralschäumen ein Prepolymer aus Rein-MDI und mindestens einem Polyoxypropylen- und/oder Polyoxypropylen-Polyoxyethylen-Polyol mit NCO-Gehalten < 15 Gew.-%, vorzugsweise < 13 Gew.-%, eingesetzt werden und das Mischungsverhältnis von Polyol- zu Isocyanatkomponente bei der Verschäumung < 1 ist.

Gegenstand der Erfindung ist demzufolge ein Verfahren zur Herstellung von hochelastischen Polyurethan-Formkörpern mit kompakter Oberfläche und zelligem Kern durch Umsetzung von
a) modifizierten organischen Polyisocyanaten mit
b) mindestens einer Verbindung mit mindestens zwei reaktiven Wasserstoffatomen und einem Molekulargewicht von 1000 bis 8000
c) Kettenverlängerern in Gegenwart von
d) Treibmitteln,
e) Katalysatoren und gegebenenfalls
f) üblichen Hilfsmitteln und/oder Zusatzstoffen

in einem geschlossenen Formwerkzeug unter Verdichtung, dadurch gekennzeichnet, daß als modifiziertes organisches Polyisocyanat (a) ein Umsetzungsprodukt aus 4,4'-Diisocyanato-diphenylmethan mit mindestens einem Polyoxypropylen- und/oder Polyoxypropylen-Polyoxyethylen-Polyol mit einem NCO-Gehalt von < 15 Gew.-%, insbesondere < 13 Gew.-%, verwendet wird und das Gewichtsverhältnis von a) zu (b+c+d+e+f) größer als 1 ist, Kettenverlängerer c) Diole mit einem Molekulargewicht von < 400 und als Treibmittel d) Wasser eingesetzt wird.

Unter "hochelastisch" ist zu verstehen, daß die Rückprallelastizität nach DIN 53512 mindestens 35 % beträgt.

Die Polyoxypropylen- und Polyoxypropylen-Polyoxyethylenpolyole, die zur Herstellung der modifizierten organischen Polyisocyanate eingesetzt werden, sind vorzugsweise 2- bis 3-funktionell. Ihre Herstellung erfolgt zumeist durch die allgemein bekannte basisch katalysierte Anlagerung von Propylenoxid allein oder im Gemisch mit Ethylenoxid an H-funktionelle, insbesondere OH-funktionelle Startsubstanzen. Als Startsubstanzen dienen beispielsweise Wasser, Ethylenglykol oder Propylenglykol beziehungsweise Glycerin oder Trimethylolpropan.

Bei Verwendung von Ethylenoxid/Propylenoxidmischungen wird das Ethylenoxid bevorzugt in einer Menge von 10-50 Gew.-%, bezogen auf die Gesamtmenge an Alkylenoxid, eingesetzt. Der Einbau der Alkylenoxide kann hierbei blockweise oder als statistisches Gemisch erfolgen. Besonders bevorzugt ist der Einbau eines Ethylenoxid-Endblocks ("EO-cap"), um den Gehalt an reaktiveren primären OH-Endgruppen zu erhöhen.

Die zur Herstellung der modifizierten organischen Polyisocyanate eingesetzten Polyetherpolyole haben eine Funktionalität von 2 bis 3 und Molekulargewichte von 1000 bis 8000, vorzugsweise von 2000 bis 6000.

Bevorzugt eingesetzt werden Diole, basierend auf Polyoxypropylen mit ca. 20 Gew.-% Polyoxyethyleneinheiten am Kettenende, so daß > 80 % der OH-Gruppen primäare OH-Gruppen sind. Das Molekulargewicht dieser Diole liegt vorzugsweise zwischen 2000 und 4500.

Die Herstellung der erfindungsgemäß verwendeten Prepolymere erfolgt auf an sich bekannte Weise, indem das Rein-MDI bei Temperaturen von etwa 80°C mit den Polyolen zum Prepolymer umgesetzt wird. Um Nebenreaktionen durch Luftsauerstoff auszuschließen, sollte das Reaktionsgefäß mit einem Inertgas, vorzugsweise Stickstoff, gespült werden. Das Polyol-Polyisocyanat-Verhältnis wird so gewählt, daß der NCO-Gehalt des Prepolymeren < 15 Gew.-%, vorzugsweise < 13 Gew.-%, beträgt.

Das verwendete Rein-MDI kann geringe Mengen, bis etwa 5 Gew.-%, allophanat- oder uretoniminmodifizierte Polyisocyanate enthalten. Es können auch geringe Mengen Polyphenylenpolymethylenpolyisocyanat (Roh-MDI) eingesetzt werden. Die Gesamtmenge dieser hochfunktionellen Polyisocyanate sollte 5 Gew.-% des eingesetzten Isocyanates nicht überschreiten, um eine unerwünschte Vernetzung und damit eine Verschlechterung der mechanischen Eigenschaften der resultierenden Schaumstoffe zu vermeiden.

Für bestimmte Einsatzfälle kann es sinnvoll sein, Gemische aus Rein-MDI und anderen aromatischen Diisocyanaten, beispielsweise 2,4- oder 2,4'-Diisocyanatodiphenylmethan zu verwenden. Der Anteil dieser Diisocyanate sollte jedoch 10 Gew.-% nicht übersteigen.

Höhermolekulare Verbindungen b) mit mindestens zwei gegen Isocyanatgruppen reaktiven H-Atomen sind vorzugsweise Polyetherpolyole. Sie werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest hergestellt. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so daß die entstehenden Polyole zu über 70 % primäre OH-Endgruppen aufweisen.

Als Startermolekül kommen Wasser oder 2- und 3-wertige Alkohole in Betracht, wie Ethylenglykol, Propandiol-1,2 und -1,3, Diethylenglykol, Dipropylenglykol, Butandiol-1,4, Glycerin, Trimethylolpropan usw.

Die Polyetherpolyole, vorzugsweise Polyoxypropylen-polyoxyethylen-polyole, besitzen also eine Funktionalität von 2 bis 3 und Molekulargewichte von 1.000 bis 8.000, vorzugsweise 2.000 bis 6.000.

Als Polyetherole eignen sich ferner polymermodifizierte Polyetherpolyole, vorzugsweise Pfropfpolyetherpolyole, insbesondere solche auf Styrol- und/oder Acrilnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 1 111 394, 1 222 669 (US 3 304 273, 3 383 351, 3 523 093), 1 152 536 (GB 1 040 452) und 1 152 537 (GB 987 618) hergestellt werden, sowie Polyetherdispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltene Polyurethane und/oder Melamin und die z.B. beschrieben werden in der EP-B-11752 (US 4 304 708), US-A-4 374 209 und DE-A-32 31 497.

Weiterhin geeignet sind Polyesterpolyole. Diese können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/ oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorteilhafterweise kleiner als 10, vorzugsweise kleiner als 2 ist, polykondensiert werden. Nach einer bevorzugten Ausführungsform wird als Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyesterpolyole besitzen vorzugsweise eine Funktionalität von 2 bis 4, insbesondere 2 bis 3, und ein Molekulargewicht von 480 bis 3000, vorzugsweise 1000 bis 3000.

Als niedermolekulare Kettenverlängerer c) verwendet werden Diole mit Molekulargewichten < 400, vorzugsweise 60 bis 150.

Beispiele sind Ethylenglykol, Butandiol-1,4 und Diethylenglykol. Die Kettenverlängerer können dabei einzeln oder als Mischungen eingesetzt werden. Ihre Menge beträgt 4 bis 30, vorzugsweise 5 bis 15 Gew.-%, bezogen auf das Gewicht der Komponenten b) und c).

Als Treibmittel (d) wird bevorzugt Wasser eingesetzt. Es ist möglich, zur besseren Verarbeitbarkeit geringe Mengen eines Cotreibmittels beizumengen. Hierzu gehören die üblichen leichtflüchtigen Substanzen wie n-Pentan, Cyclopentan oder Tetrafluorethan usw.

Als Katalysatoren e) zur Herstellung der Integralschäume werden insbesondere Verbindungen verwendet, die die Reaktion der Hydroxylgruppen enthaltenden Verbindungen der Komponenten b) und c) mit den Polyisocyanaten a) stark beschleunigen.

In Betracht kommen beispielsweise Zinn(II)verbindungen wie Zinndiacetat oder Zinndioctoat oder Dialkylzinn-IV-salze wie Dibutylzinndilaurat usw. Die Metallverbindungen werden gewöhnlich in Kombination mit stark basischen Aminen eingesetzt. Genannt seien beispielsweise Triethylamin, Pentamethyldiethylentriamin, Tetramethyl-diaminoethylether, 1,2-Dimethylimidazol oder vorzugsweise Triethylendiamin (Dabco).

Der Reaktionsmischung zur Herstellung der Formkörper können gegebenenfalls auch noch Hilfsmittel und/oder Zusatzstoffe f) einverleibt werden. Genannt seien beispielsweise oberflächenaktive Substanzen, Schaumstabilisatoren, Zellregler, äußere und innere Trennmittel, Füllstoffe, Farbstoffe, Pigmente, Flammschutzmittel, Hydrolysenschutzmittel, fungistatisch und bakteriostatisch wirkende Substanzen.

Weitere Angaben über die verwendeten Ausgangsstoffe finden sich beispielsweise im Kunststoffhandbuch, Band 7, "Polyurethane", herausgegeben von Günter Oertel, Carl-Hanser-Verlag, München, 3. Auflage, 1993.

Zur Herstellung der Formkörper werden die organischen Polyisocyanate a), höhermolekulare Verbindungen mit mindestens 2 reaktiven Wasserstoffatomen b) und gegebenenfalls Kettenverlängerer c) in solchen Mengen zur Umsetzung gebracht, daß das Äquivalenzverhältnis von NCO-Gruppen der Polyisocyanate a) zur Summe der reaktiven Wasserstoffatome der Komponenten b) und gegebenenfalls c) 1:0,8 bis 1:1,25, vorzugsweise 1:0,9 bis 1:1,15 beträgt.

Aufgrund des niedrigen NCO-Gehaltes der modifizierten organischen Polyisocyanate ist dabei das Gewichtsverhältnis der Komponente a) zur Summe der Komonente b bis f) größer als 1.

Die Formkörper werden nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im Kunststoff-Handbuch, Band 7, Polyurethane, 2. Auflage, 1983, Seiten 333ff.

Die Ausgangskomponenten werden bei einer Temperatur von 15 bis 90°C, vorzugsweise von 20 bis 35°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 90°C, vorzugsweise 30 bis 60°C.

Die Menge des in das Formwerkzeug eingebrachten Reaktionsgemisches wird so bemessen, daß die erhaltenen Formkörper aus Integralschaumstoffen eine Dichte von 80 bis 700 g/l, insbesondere von 120 bis 600 g/l aufweisen. Die Verdichtungsgrade zur Herstellung der Formkörper mit verdichteter Randzone und zelligem Kern liegen im Bereich von 1,1 bis 8,5, vorzugsweise von 2 1 bis 7.

Die nach dem erfindungsgemäßen Verfahren hergestellten Integralschaumstoffe zeichnen sich gegenüber den nach herkömmlichen Verfahren hergestellten Produkten durch eine deutliche verbesserte Elastizität aus. So konnte die Rückprallelastizität auf Werte von 50 % gesteigert werden, ohne daß es zu einer Verschlechterung der übrigen mechanischen Kennwerte kam. Überraschenderweise trat auch bei Dichten unter 300 g/l kein Schrumpf auf, so daß es auf diese Weise möglich ist, erstmals problemlos für Schuhsohlenanwendungen derart niederdichte Formkörper herzustellen.

Die erfindungsgemäß verwendeten Prepolymere sind wochenlang bei Raumtemperatur lagerstabil, obwohl man aufgrund des geringen NCO-Gehaltes mit einer verstärkten Kristallisationsneigung hätte rechnen müssen.

### Beispiele

### Beispiel 1

### a) Herstellung des Prepolymeren

40 Gew.-Teile 4,4'-Diisocyanatodiphenylmethan (Rein-MDI) und 2 Gew.-Teile uretoniminmodifiziertes Rein-MDI( Lupranat® MM 103 der BASF AG) wurden in einem Dreihalskolben unter Stickstoffatmosphäre aufgeschmolzen und bei 80°C unter RÜhren mit 58 Gew.-Teilen eines Polyoxypropylen (80 Gew.-%)-polyoxyethylen (20 Gew.-%)-glykols mit einer Hydroxylzahl von 27 mg KOH/g und unter Verwendung von Propandiol-1,2 als Startermolekül hergestellt, versetzt. Die Mischung wurde zur vollständigen Umsetzung 1 Stunde auf 80°C erwärmt und anschließend abkühlen lassen. Es resultierte eine fast farblose Flüssigkeit mit einem NCO-Gehalt von 12,5 % und einer Viskosität (bei 25°C) von 1.000 mPa·s. Die Flüssigkeit war bei Raumtemperatur wochenlang lagerstabil.

### b) Herstellung des Integralschaumes

### A-Komponente

| | |
|---|---|
| 78 Gew.-Teile | Polyoxypropylen (80 Gew.-%)-polyoxyethylen (20 Gew.-%)-glykol mit der Hydroxylzahl 27 mg KOH/g, hergestellt unter Verwendung von Glycerin als Startermolekül |
| 20 Gew.-Teile | Butandiol-1,4 |
| 0,6 Gew.-Teile | Triethylendiamin |
| 0,1 Gew.-Teile | Dibutylzinndilaurat |
| 0,3 Gew.-Teile | eines Schaumstabilisators auf Silikonbasis (DC 193 der Firma Dow Corning) |
| 1,0 Gew.-Teile | Wasser |

### B-Komponente

### Prepolymeres von Beispiel 1a

100 Gew.-Teile der A-Komponente und 183 Gew.-Teile der B-Komponente wurden bei 23° intensiv gemischt und die Mischung in ein auf 50°C temperiertes, plattenförmiges Formwerkzeug aus Aluminium mit den Abmessungen 20 cm x 20 cm x 1 cm in einer solchen Menge eingebracht, daß nach dem Aufschäumen und Aushärten lassen im geschlossenen Formwerkzeug eine Integralschaumplatte mit der Gesamtdichte von 550 g/l resultierte.

### Beispiel 2

### a) Herstellung eines Prepolymeren

43 Gew.-Teile Rein-MDI und 2 Gew.-Teile uretoniminmodifiziertes Rein-MDI (Lupranat® MM 103) wurden wie im Beispiel 1a beschrieben mit 55 Gew.-Teilen Polyoxypropylen mit einer Hydroxylzahl 56 mg KOH/g und unter Verwendung von propandiol-1,2 als Startermolekül hergestellt, umgesetzt.

Es resultierte eine fast farblose Flüssigkeit mit einem NCO-Gehalt von 12,4 % und einer Viskosität (bei 25°C) von 1380 mPas. Die Flüssigkeit war lagerstabil.

### b) Herstellung des Integralschaums

### A-Komponente

| | |
|---|---|
| 81,6 Gew.-Teile | Polyoxypropylen (80 Gew.-%) -polyoxyethylen (20 Gew.-%( -glykol mit der Hydroxylzahl 27 mg KOH/g, hergestellt unter Verwendung von Glycerin als Startermolekül |
| 15,9 Gew.-Teile | Butandiol-1,4 |
| 1,2 Gew.-Teile | Triethylendiamin |
| 0,1 Gew.-Teile | Dibutylzinndilaurat |
| 0,3 Gew.-Teile | eines Schaumstabilisators auf Silikonbasis (DC 193 der Firma Dow Corning) |
| 0,9 Gew.-Teile | Wasser |

### B-Komponente

### Prepolymeres von Beispiel 2a

100 Gew.-Teile der A-Komponente und 161 Gew.-Teile der B-Komponente wurden wie im Beispiel 1 beschrieben zu einer Integralschaumplatte der Dichte 550 g/l verarbeitet.

### Beispiel 3 (Vergleichsbeispiel)

### a) Herstellung des Prepolymeren

76 Gew.-Teile Rein-MDI und 2 Gew.-Teile uretoniminmodifiziertes Rein-MDI (Lupranat® MM 103, BASF AG) wurden in einem Dreihalskolben unter Stickstoffatmosphäre aufgeschmolzen und bei 80°C unter Rühren mit 7 Gew.-Teilen Dipropylenglykol und 15 Gew.-Teilen Polyoxypropylenglykol mit der Hydroxylzahl 112 mg KOH/g, hergestellt unter Verwendung von Propandiol-1,2 als Startermolekül, versetzt. Die Mischung wurde zur vollständigen Umsetzung 1 Stunde auf 80°C gehalten und anschließend abkühlen lassen. Es resultierte eine fast farblose Flüssigkeit mit einem NCO-Gehalt von 20,6 % und einer Viskosität (bei 25°C) von 1.050 mPa-s. Die Flüssigkeit war bei Raumtemperatur lagerstabil.

### b) Herstellung des Integralschaumes

### A-Komponente

| | |
|---|---|
| 88,3 Gew.-Teile | Polyoxypropylen (80 Gew.-%)-polyoxyethylen (20 Gew.-%)-glykol mit der Hydroxylzahl 27, hergestellt unter Verwendung von Propandiol-1,2 als Startermolekül |
| 10,3 Gew.-Teile | Butandiol-1,4 |
| 0,75 Gew.-Teile | Triethylendiamin |
| 0,02 Gew.-Teile | Dibutylzinndilaurat |
| 0,18 Gew.-Teile | eines Schaumstabilisators auf Silikonbasis (DC 193 der Firma Dow Corning) |
| 0,47 Gew.-Teile | Wasser |

### B-Komponente

### Prepolymeres von Beispiel 3a

100 Gew.-Teile der A-Komponente und 64 Gew.-Teile der B-Komponente wurden bei 23° intensiv gemischt und die Reaktionsmischung in ein auf 50°C temperiertes, plattenförmiges Formwerkzeug aus Aluminium mit den Abmessungen 20 cm x 20 cm x 1 cm in einer solchen Menge eingebracht, daß nach dem Aufschäumen und Aushärten lassen im geschlossenen Formwerkzeug eine Integralschaumplatte mit der Gesamtdichte von 550 g/l resultierte.

Zusammenfassend werden in den beiden Tabellen 1 und 2 zum Vergleich die Eigenschaften der Prepolymeren und der daraus hergestellten Integralschäume gegenübergestellt. Die mechanischen Eigenschaften der Schaumplatten wie Zugfestigkeit, Dehnung und Weiterreißfestigkeit, sowie die Shore-Härte waren fast gleich.

Zur Bestimmung des Schrumpfes wurden jeweils zwei Integralschaumplatten mit einer Dichte von 300 bzw. 400 g/l hergestellt.

**Tabelle 1**

| (Prepolymeres) | | | |
|---|---|---|---|
| | NCO-Gehalt | Viskosität | Lagerstabilität (RT) |
| Bsp. 1 | 12,5 Gew.-% | 1.000 mPa·s | + |
| Bsp. 2 | 12,4 Gew.-% | 1.380 mPa·s | + |
| Bsp. 3 (V) | 20,6 Gew.-% | 1.050 mPa·s | + |
| RT: Raumtemperatur | | | |
| + : Lagerstabil | | | |

**Tabelle 2**

| (Integralschaumstoffe) | | | |
|---|---|---|---|
| | A:B-Verhältnis (Gewicht) | Rückprallelastizität*) (%) | Schrumpf (d**) ≤ 400 g/l) |
| Bsp. 1 | 100 : 183 | 51 % | nein |
| Bsp. 2 | 100 : 161 | 50 % | nein |
| Bsp. 3 (V) | 100 : 61 | 27 % | ja |

| | | | |
|---|---|---|---|
| *) DIN 53 512 | | | |
| **) Dichte | | | |

### Beispiele 4 bis 9 (Integralschäume geringer Dichte).

### a) Herstellung des Prepolymeren

57 Gew.-Teile Rine-MDI und 2 Gew.-Teile uretoniminmodifiziertes Rein-MDI (Lupranat® MM 103 der BASF AG) wurden wie im Beispiel 1a beschrieben mit 41 Gew.-Teilen eines Polyoxypropylen(80 %) -polyoxyethylen(20 %)-glykols mit einer Hydroxylzahl von 27 mg KOH/g und unter Verwendung von Propandiol-1,2 als Startermolekül hergestellt, umgesetzt.

Es resultierte eine fast farblose Flüssigkeit mit einem NCO-Gehalt von 12,8 % und einer Viskosität von 1.018 mPa·s bei 25°C.

### b) Herstellung der Integralschäume

### A-Komponente

| | |
|---|---|
| 77 Gew.-Teile | Polyoxypropyln(80 %)-polyoxyethylen(20 %)-polyol mit einer Hydroxylzahl 27 mg KOH/g, hergestellt mit Glycerin als Starter. |
| 20 Gew.-Teile | Butandiol-1,4 |
| 1 Gew.-Teil | Triethylendiamin |
| 0,1 Gew.-Teile | Dibutylzinndilaurat |
| 0,3 Gew.-Teile | Schaumstabilisator auf Silikonbasis (DC 193 der Firma Dow Corning) |

Wasseranteil gemäß Tabelle 3.

A-Komponente und Prepolymeres wurden im Gewichtsverhältnis 53:100 gemischt und durch Aushärten in einer geschlossenen Alu-Form zu Integralschäumen umgesetzt. Die Gesamtdichte der Integralschäume wurde durch die Menge des in die Form gegebenen Reaktionsgemisches variiert. Die gemessenen mechanischen i Eigenschaften der Integralschaumplatten zeigt Tabelle 3.

**Tabelle 3**

| Beispiel | 4 | 5 | 6 | 7 | 8 | 9 |
|---|---|---|---|---|---|---|
| Wasser (Gew.-Teile bezogen auf die A-Komponente) | 1,6 | 1,6 | 1,6 | 1,6 | 2,0 | 2,0 |
| Formteildichte (g/l) | 500 | 450 | 400 | 350 | 300 | 250 |
| Zugfestigkeit (N/mm²) | 2,7 | 2,7 | 2,3 | 2,0 | 1,6 | 1,3 |
| Reißdehnung (%) | 381 | 406 | 369 | 361 | 323 | 320 |
| Härte (Shore A) | 52 | 49 | 45 | 38 | 31 . | 23 |
| Rückprallelastizität (%) | 46 | 46 | 47 | 46 | 41 | 36 |

### Beispiel 1 (Vergleich)

Es wurde nach dem in Beispiel 3 beschriebenen Vergleichsversuch gearbeitet, wobei die Wassermenge auf 0,6 Gew.-Teile/100 Gew.Teil A-Komponente erhöht wurde. Es resultierte ein Schaum mit der freigeschäumten Dichte von 170 g/l, der jedoch stark schrumpfte.

Niederdichte Formteile zur Bestimmung der mechanischen Eigenschaften konnten nicht hergestellt werden, da die Teile bereits ab Formteildichten von 450 g/l schrumpften.

### Beispiel 11

### a) Herstellung eines Prepolymeren aus Polypropylenglykol

Wie im Beispiel 1 beschrieben, wurden umgesetzt:

| | |
|---|---|
| 45 Gew.-Teile | Rein-MDI und |
| 55 Gew.-Teile | eines Polyoxypropylenglykols mit einer Hydroxylzahl 56 mg KOH/g. |

Es resultierte eine fast farblose Flüssigkeit mit einem NCO-Gehalt von 12,6 % und einer Viskosität von 1.148 mPa·s bei 25°C.

### b) Herstellung eines Integralschaums

### A-Komponente

| | |
|---|---|
| 74 Gew.-Teile | Triol wie in Beispiel 1 beschrieben |
| 23 Gew.-Teile | Butandiol-1,4 |
| 1,5 Gew.-Teile | Triethylendiamin |
| 0,1 Gew.-Teile | Dibutylzinndilaurat |
| 0,35 Gew.-Teile | Schaumstabilisator (DC 193) |
| 1,2 Gew.-Teile | Wasser |

A-Komponente und Prepolymeres wurden im Gewichtsverhältnis 47:100 gemischt und wie in Beispiel 1 beschrieben verschäumt.

Die Eigenschaften des erhaltenen Integralschaums zeigt Tabelle 4.

### Beispiel 12

### a) Herstellung eines Prepolymeren

| | |
|---|---|
| 43,5 Gew.-Teile | Rein-MDI |
| 2,0 Gew.-Teile | Uretoniminmodifiziertes Rein-MDI (Lupranat® mm 103) |
| 54,5 Gew.-Teile | Polyoxypropylen (80 %)-polyoxyethylen(20%) -polyol mit einer OH-Zahl von 56 und mit Propandiol-1,2 als Starter |

Es resultierte eine fast farblose Flüssigkeit mit einem NCO-Gehalt von 12,9 % und einer Viskosität von 1.040 mPa·.

### b) Herstellung eines Integralschaums

### A-Komponente

| | |
|---|---|
| 77,5 Gew.-Teile | eines Polyoxypropylen(80 %)-polyoxyethylen(20 %) -polyols der OH-Zahl 27, hergestellt mit Glycerin als Starter |
| 20 Gew.-Teile | Butandiol-1,4 |
| 1,0 Gew.-Teile | Triethylendiamin |
| 0,1 Gew.-Teile | Dibutylzinndilaurat |
| 0,35 Gew.-Teile | Schaumstabilisator (DC 193) |
| 1,0 Gew.-Teile | Wasser |

Die A-Komponente wurde mit dem Prepolymeren im Gewichtsverhältnis 55:100 umgesetzt.

Die Eigenschaften des Integralschaums zeigt Tabelle 4.

### Beispiel 13

### (Integralschaum mit Polytetrahydrofuran als Polyolkomponente)

### A-Komponente

| | |
|---|---|
| 37,6 Gew.-Teile | Polyoxypropylen(80 %)-polyoxyethylen(20 %)-polyol, OH-Zahl 27, hergestellt mit Glycerin als Starter |
| 40,0 Gew.-Teile | Polytetrahydrofuran mit einer OH-Zahl 56 mg KOH/g |
| 20,0 Gew.-Teile | Butandiol-1,4 |
| 0,35 Gew.-Teile | Schaumstabilisator DC 193) |
| 0,1 Gew.-Teile | Dibutylzinndilaurat |
| 1,0 Gew.-Teile | Triethylendiamin |
| 1,0 Gew.-Teile | Wasser |

### B-Komponente: Prepolymeres aus Beispiel 1.

A- und B-Komponente wurden im Verhältnis 53:100 umgesetzt. Die mechanischen Eigenschaften des erhaltenen Integralschaums zeigt Tabelle 4.

### Beispiel 14

### (Herstellung eines Integralschaums mit Pfropfpolyolen)

### A-Komponente

| | |
|---|---|
| 42,0 Gew.-Teile | Polyoxypropylen(80 %)-polyoxyethylen(20 %)-polyol, OH-Zahl 27, hergestellt unter Verwendung von Glycerin als Startermolekül |
| 42,0 Gew.-Teile | von obigem Polyethertriol, das jedoch 30 Gew.-% Styro-Acrylnitril (1:1) aufgepfopft enthält. Die OH-Zahl des Pfropfpolyols beträgt 25 mg KOH/g |
| 13,5 Gew.-Teile | Butandiol-1,4 |
| 1,0 Gew.-Teile | Triethylendiamin |
| 0,1 Gew.-Teile | Dibutylzinndilaurat |
| 0,35 Gew.-Teile | Schaumstabilisator DC 193) |
| 1,0 Gew.-Teile | Wasser |

### B-Komponente

Umsetzungsprodukt aus 45 Gew.-Teilen Rein-MDI und 55 Gew.-Teilen eines Polyoxypropylen(80 %)-polyoxyethylen(20 %)-glykols der OH-Zahl 27, mit Propandiol-1,2 als Starter hergestellt.

Der NCO-Gehalt des Prepolymeren betrug 13,9 %, die Viskosität 950 mPa·s. A- und B-Komponente wurden im Verhältnis 77:100 umgesetzt. Die mechanischen Eigenschaften der erhaltenen Integralschäume zeigt Tabelle 4.

Beispiel 15 (Vergleich )

### A-Komponente

| | |
|---|---|
| 69,0 Gew.-Teile | eines Polyoxypropylen(80 %)-polyoxyethylen(20 %)-polyols mit der OH-Zahl 27 und mit Propandiol-1,2 als Starter |
| 19,0 Gew.-Teile | eines Polyoxypropylen(80 %)-polyoxyethylen(20 %)-polyols mit der OH-Zahl 27 und mit Glycerin als Starter |
| 10,5 Gew.-Teile | Butandiol-1,4 |
| 0,75 Gew.-Teile | Triethylendiamin |
| 0,02 Gew.-Teile | Dibutylzinndilaurat |
| 0,20 Gew.-Teile | Schaumstabilisator DC 193) |
| 0,50 Gew.-Teile | Wasser |

### B-Komponente

### Prepolymeres aus Beispiel 3 (Vergleichsbeispiel)

A- und B-Komponente wurden im Verhältnis 100:67 gemischt und ein Formkörper der Dichte 550 g/l hergestellt. Die mechanischen Eigenschaften des erhaltenen Integralschaums zeigt Tabelle 4.

**Tabelle 4**

| Beispiel | 11 | 12 | 13 | 14 | 15 |
|---|---|---|---|---|---|
| Formteildichte (g/l) | 550 | 550 | 550 | 550 | 550 |
| Zugfestigkeit (N/mm²) | 5,1 | 5,8 | 4,5 | 5,0 | 4,6 |
| Reißdehnung (%) | 447 | 425 | 437 | 416 | 419 |
| Härte (Shore A) | 60 | 62 | 61 | 57 | 62 |
| Rückprallelastizität (%) | 46 | 43 | 54 | 45 | 29 |

## Patentansprüche

1. Verfahren zur Herstellung von Polyurethanformkörpern mit kompakter Oberfläche und zelligem Kern mit einer Rückprallelastizität nach DIN 53512 von mindestens 35 % durch Umsetzung von
a) modifizierten organischen Polyisocyanaten mit
b) mindestens einer Verbindung mit mindestens zwei reaktiven Wasserstoffatomen und einem Molekulargewicht von 1000 bis 8000,
c) Kettenverlängerungsmitteln,
in Gegenwart von
d) Treibmitteln,
e) Katalysatoren und gegebenenfalls
f) üblichen Hilfsmitteln und/oder Zusatzstoffen
in einem geschlossenen Formwerkzeug unter Verdichtung, dadurch gekennzeichnet, daß als modifiziertes organisches Polyisocyanat a) mindestens ein Umsetzungsprodukt aus 4,4'-Diisocyanato-diphenylmethan mit mindestens einem Polyoxypropylen- und/oder Polyoxypropylen-Polyoxyethylenpolyol eingesetzt wird, das einen NCO-Gehalt von < 15 Gew.-% aufweist und als Kettenverlängerungsmittel c) Diole mit einem Molekulargewicht von < 400 eingesetzt werden, wobei bei der Umsetzung das Gewichtsverhältnis von a) zu (b+c+d+e+f) größer als 1 ist und als Treibmittel d) Wasser eingesetzt wird.

2. Verfahren nach Anspruch 1, dadurch gekennzeichnet, daß das modifizierte organische Polyisocyanat einen NCO-Gehalt von < 13 Gew.-% aufweist.

3. Verfahren nach Anspruch 1, dadurch gekennzeichnet, daß die modifizierten organischen Polyisocyanate Umsetzungsprodukte aus 4,4'-Diisocyanato-Diphenylmethan und mindestens einem Polyoxypropylendiol und/oder -triol und/oder Polyoxypropylen-Polyoxyethylendiol und/oder -triol sind.

4. Verfahren nach Anspruch 1, dadurch gekennzeichnet, daß die zur Herstellung der modifizierten Polyisocyanate a) verwendeten Polyetherpolyole ein Molekulargewicht von 1.000 bis 8.000 besitzen.

5. Verfahren nach Anspruch 1, dadurch gekennzeichnet, daß die zur Herstellung der modifizierten Polyisocyanate verwendeten Polyetherpolyole ein Molekulargewicht von 2000 bis 6000 besitzen.

## Claims

1. A process for producing polyurethane moldings having a compact surface and a cellular core and having a rebound resilience in accordance with DIN 53512 of at least 35% by reacting
a) modified organic polyisocyanates with
b) at least one compound containing at least two reactive hydrogen atoms and having a molecular weight of from 1000 to 8000,
c) chain extenders,
in the presence of
d) blowing agents,
e) catalysts and, if desired,
f) customary auxiliaries and/or additives
in a closed mold with compaction, wherein the modified organic polyisocyanate a) which is used is at least one reaction product of 4,4'-diisocyanatodiphenylmethane with at least one polyoxypropylene polyol and/or polyoxypropylene-polyoxyethylene polyol, with the modified organic polyisocyanate having an NCO content of < 15 % by weight, and the chain extenders c) used are diols having a molecular weight of < 400, with the weight ratio of a) to (b+c+d+e+f) in the reaction being greater than 1 and the blowing agent d) used being water.

2. A process as claimed in claim 1, wherein the modified organic polyisocyanate has an NCO content of < 13 % by weight.

3. A process as claimed in claim 1, wherein the modified organic polyisocyanates are reaction products of 4,4'-diisocyanatodiphenylmethane and at least one polyoxypropylene diol and/or triol and/or polyoxypropylene-polyoxyethylene diol and/or triol.

4. A process as claimed in claim 1, wherein the polyether polyols used for preparing the modified polyisocyanates a) have a molecular weight of from 1000 to 8000.

5. A process as claimed in claim 1, wherein the polyether polyols used for preparing the modified polyisocyanates have a molecular weight of from 2000 to 6000.

## Revendications

1. Procédé de fabrication de corps moulés en polyuréthane, à surface compacte et âme cellulaire avec une élasticité au rebondissement selon DIN 53512 d'au moins 35 %, par réaction de :
a) polyisocyanates organiques modifiés avec
b) au moins un composé présentant au moins deux atomes d'hydrogène réactif et un poids moléculaire de 1.000 à 8.000,
c) des agents de prolongation des chaînes
en présence :
d) d'agents de moussage,
e) de catalyseurs et éventuellement,
f) des agents auxiliaires et/ou des additifs habituels,
dans un moule fermé, avec compactage, caractérisé en ce que comme polyisocyanate organique modifié (a) on utilise un produit de réaction de 4,4'-diisocyanato-diphénylméthane avec au moins un polyoxypropylène et/ou polyoxypropylène-polyoxyéthylène-polyol dont la teneur en NCO est < 15 % en poids et comme agent de prolongation des chaînes c) des diols d'un poids moléculaire < 400, tandis que dans la réaction, le rapport pondéral entre a) et (b+c+d+e+f) est supérieur à 1, et qu'on utilise de l'eau comme agent de moussage d).

2. Procédé selon la revendication 1, caractérisé en ce que le polyisocyanate organique modifié présente une teneur en NCO < 13 % en poids.

3. Procédé selon la revendication 1, caractérisé en ce que les polyisocyanates organiques modifiés sont des produits de la réaction de 4,4'-diisocyanato-diphénylméthane et d'au moins un polyoxypropylène-diol et/ou polyoxypropylène-triol, et/ou d'un polyoxypropylène-polyoxyéthylène-diol et/ou polyoxypropylène-polyoxyéthylène-triol.

4. Procédé selon la revendication 1, caractérisé en ce que les polyéther-polyols utilisés pour la préparation des polyisocyanates modifiés a) présentent un poids moléculaire de 1.000 à 8.000.

5. Procédé selon la revendication 1, caractérisé en ce que les polyéther-polyols utilisés pour la préparation des polyisocyanates modifiés présentent un poids moléculaire de 2.000 à 6.000.
